Europäisches Patentamt

**European Patent Office**

**Office européen des brevets**

(11) Publication number: **0 234 952**
**A2**

## (12) EUROPEAN PATENT APPLICATION

(21) Application number: **87301760.2**

(22) Date of filing: **27.02.87**

(51) Int. Cl.⁴: **H 02 M 7/757**
**H 02 M 7/797**

(30) Priority: **27.02.86 GB 8604905**

(43) Date of publication of application:
**02.09.87 Bulletin 87/36**

(84) Designated Contracting States:
**AT DE ES FR GB IT NL SE**

(71) Applicant: **Derritron Group Limited**
**River Gardens North Feltham Trading Estate**
**Feltham Middlesex TW14 0RD (GB)**

(72) Inventor: **Williams, Barry Wayne**
**108 Princes Gardens Acton**
**London W3 0LJ (GB)**

**Rusby, David Michael**
**17 Church Road St. Leonards**
**East Sussex (GB)**

**Goodfellow, John Kevin**
**25 Osterley Close Bragbury End Stevenage**
**Hertfordshire SG2 8SN (GB)**

(74) Representative: **Arthur, George Fitzgerald et al**
**KILBURN & STRODE 30, John Street**
**London WC1N 2DD (GB)**

(54) Electric power source.

㉗ A semi-conductor switching bridge (2) for supplying a load (1) from a d.c. source (11) has the switches (3,4,5, and 6) controlled by a controller (13) in response to a comparison of the instantaneous load current as measured as (12) with predetermined upper and lower bounds (18,19) above and below a reference current waveform (16) so that the load current is switched and alternates between the bounds (18,19) as indicated at (15).

FIG 1.

FIG 2.

**Description**

ELECTRIC POWER SOURCE

This invention relates to an electric power source comprising a bridge of switching devices arranged for supply from a d.c. source and arranged to deliver controlled load current for example to drive a motor, a solenoid, loadspeakers or vibrating tables.

An object of the invention is to provide a power source in which the force developed can be accurately controlled in accordance with a predetermined reference wave form.

The invention is based on the idea of detecting the load current and using a measure of the comparison of the instantaneous load current with the instantaneous value of the reference wave form to control the switching devices in the bridge.

In general the power source should be suitable for a load which may be inductive or capacitive at the reference wave form frequency. Switching of the switching devices in response to the load current departing from the instantaneous reference current by more than a predetermined amount will be at a high frequency compared with the reference wave form frequency, and in general at that high frequency the load can be considered to be inductive.

According to an aspect of the invention a controller for the switching devices in the bridge is arranged to cause the bridge to operate in any of three difference modes namely a +V mode in which current is delivered from the d.c. source to the load terminals, a -V mode in which current is delivered from the load terminals to the d.c. source, and a 0V mode in which current circulates in a circuit including the load terminals but not including the d.c. source.

In the first mode current can increase rapidly in the mode whereas in the -V mode current can decay laterally as it is fed back into the source. In the 0V mode with current merely circulating in a circuit not including the d.c. source the decay of current will be slower.

This means that the switching of the switching devices can be arranged to keep the instantaneous current between preset proportions of the reference wave form with less frequent switching operations per half cycle of the reference wave form. By reducing the number of switching operations in a half cycle of the reference wave form the losses in the circuit can be reduced and the reference wave form can be followed fairly accurately and indeed to within limits as precise as is considered to be necessary in a particular application.

In general the controller will be arranged to cause the bridge to operate in a selected two only of the three different modes in any part of a half cycle of the reference wave form. Thus, for the first part of a half cycle the bridge may operate alternately in the +V mode and the 0V mode whereas at a second part of the half wave operation could be alternately in the +V mode and the -V mode. The action will be the equivalent in reverse in negative half cycles of the reference wave form.

The particular switching strategy that is used may depend upon the particular load and different strategies are possible by using appropriate logic circuits.

In general a comparator can be arranged to compare the instantaneous load current with a current which is a predetermined proportion above the reference current and another comparator can be arranged to compare the instantaneous load current with a current which is a predetermined portion below the reference current and the outputs of the two comparators can provide logic 1's and 0's for switching the devices on and off. One suitable logic circuit has a latch which is turned off when the load current exceeds an upper bound and is turned on when the load current gets below a lower bound.

For changing the combination of modes in a particular switching strategy in a half cycle of the reference wave form when the first strategy cannot keep the load current within bounds, there may be a gate which has one input from a comparator output and another input from the same comparator output through a delay circuit so that the gate will only produce the change in its output if one of the upper and lower bounds is exceeded and remains exceeded throughout its delay time indicating that the previous switching strategy needs to be changed to keep the load current between bounds.

In a simple form of bridge there are four switching devices in an H configuration with the load connected in the cross-connection of the H and with the d.c. source connected in parallel across the two legs of the H. Each switch will be in parallel with a diode. In one half cycle of the reference wave form one pair of diagonally positioned switching devices will be controlled by the controller while the others are open and in the other half cycles of the reference wave form the other diagonally opposite switching devices will be controlled while the first pair are open.

The invention includes a method of operating an electric power source comprising a bridge of switching devices arranged for supply from a d.c. source in which a reference wave form is applied to a controller for the switching devices and the detected instantaneous load current is supplied to the controller which operates the switches alternately in two different modes. The modes can be two or three different modes and the particular two modes can change during a half wave of the input.

Logic means may be used for controlling the switching devices in accordance with the relationship between the instantaneous load current and the instantaneous value of the reference waves.

Logic means can respond to the instantaneous load current exceeding bounds on either side of the reference wave form and also in response to the instantaneous load current remaining beyond bounds for more than a predetermined time interval which is small compared with the length of a half cycle of the reference wave.

The invention may be carried into practice in various ways and certain embodiments will now be described by way of example with reference to the accompanying drawings in which:-

Figure 1 is a circuit diagram of an electric power source according to the invention;

Figure 2 shows a reference wave form, upper and lower bounds on either side of the reference wave form and, diagrammatically, the value of the load current as it is kept between the bounds by operation of switching devices in the circuit of Figure 1; Figure 2 also shows diagrammatically the instants when switches in the circuit of Figure 1 are on and off;

Figure 3 is a circuit diagram of a logic circuit for effecting switching of the switching devices in the circuit of Figure 1;

Figure 4 is a diagram of a logic circuit which can be used for simple switching of the switching devices in the circuit of Figure 1; and

Figure 5 is a logic circuit using the outputs from the circuit of Figure 3 for operating the circuit of Figure 1 in accordance with the switching strategy of Figure 2;

Figures 6 and 7 correspond with Figures 2 and 5 for an alternative switching strategy with an inductive load; and

Figure 8 corresponds with Figure 6 and shows the operation of the arrangement of Figure 7 with a capacitive load.

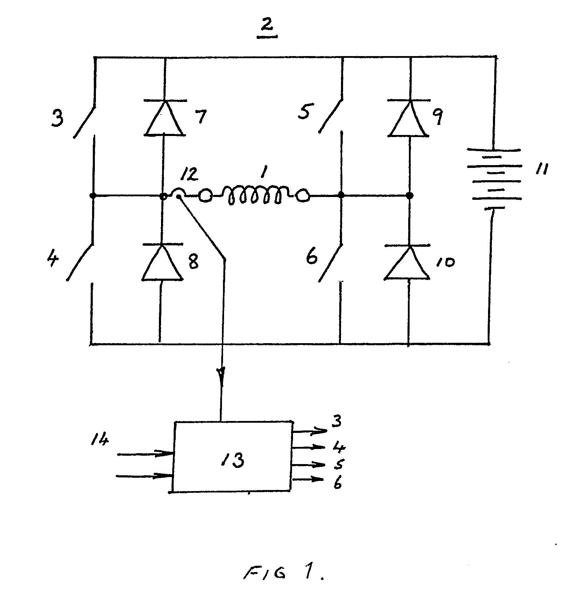

The conventional approach of forced-current-feeding a transducer is illustrated with the aid of the single-phase bridge circuit shown in Figure 1.

The load 1 is connected in the single-phase bridge 2 which comprises four gate-controlled semi-conductor switches 3,4,5 and 6 and four diodes 7,8,9 and 10 which are used to conduct reactive load current. Power for the load is provided from a D.C. voltage source 11. Current in the load circuit is measured by the current measurement transducer 12.

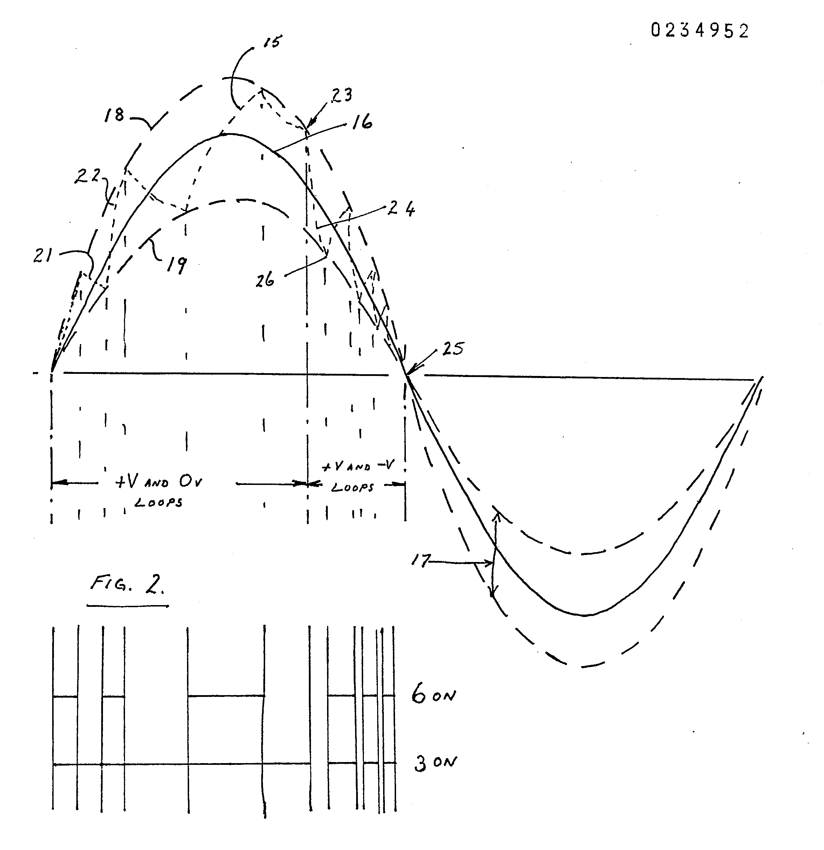

If the ideal sinusoidal current wave is as shown at 16 in Figure 2 then it is considered adequate if the load current never exceeds an upper error bound 18 or gets below a lower error bound 19. Those two errors bounds are hypothetical reference sine waves which are shown diagrammatically as applied at 14 to a controller 13 for controlling the gates on the switches 3,4,5 and 6.

In the positive half cycles of the current wave, the switches 4 and 5 are continually open,and the switches 3 and 6 open and close according to a switching strategy.

When the switches 3 and 6 are closed then current from the D.C. source 11 flows through the load 1 from left to right in Figure 1 by way of the switches 3 and 6 in a first circuit, and draws current from the source, so that the circuit can be termed a +V loop.

If both switches 3 and 6 are opened then the current in the load 1 - which cannot drop instantaneously because it is inductive - flows back to the source 11 by way of the diodes 8 and 9 and returns energy to the source so that the current in the load falls off sharply. That circuit 1,9,11,8 may be termed a -V loop.

The invention involves the use of a third mode in which the switch 3 is opened and the switch 6 is closed (or vice versa), and then current flows from the load 1 through the switch 6 and the diode 8 (or switch 3 and diode 9) in what may be called a 0V loop because it does not include the source 11. Current will not decay so quickly in the 0V loop.

The circuit is arranged to operate in a switching strategy involving, in each half cycle of the current wave, different combinations of the three modes:- +V; -V; 0V.

In general a strategy is chosen to enable there to be less switching operations in a half cycle than if there is merely alternation of +V and -V modes.

The determination of the switching strategy, in one form of the invention,may be illustrated with reference to the dashed line 15 in Figure 2 showing the actual load current in relation to the reference wave 16 and the upper and lower error bounds 18 and 19.

According to one strategy, that shown in Figure 2, at first, in a +V mode with the switches 3 and 6 closed, current is supplied through the load and increases exponentially in accordance with the inductive characteristics of the circuit, until when the current as measured at 12 reaches the upper bound 18,the switch 3 is opened and current continues to flow in the 0V mode so that it decays gradually as indicated at 21. On reaching the lower bound 19 the switch 3 is again closed so that current increases as shown at 22 until the upper bound is reached. This process continues throughout the positive half cycle until, as indicated at 23, the current in the 0V loop cannot decay fast enough to reach the lower error bound 19 before it reaches the upper error bound 18. At that stage the switch 6 is opened so that the -V mode is initiated and current is fed back into the source 11 with a corresponding more rapid decay as shown at 24. For the rest of the half cycle the strategy is to use +V mode and -V mode alternately until the zero cross position is reached at 25.

It is to be noted that the switching of a few times per half cycle of the reference current sine wave shown in the figure is only diagrammatic and that in fact the switching will be probably in the range 100KHZ to 150KHZ. In general there will be a first part of the positive half cycle of the reference current when operation is alternately in the +V mode and the 0V mode and a second part of the half cycle when switching is alternately in the +V mode and the -V mode.

At the zero cross 25 a similar strategy is adopted for the negative half cycle but now the switches 3 and 6 will be maintained open and it will be the switches 4 and 5 that are controlled so that in the +V mode current will flow from the source through the load but in the direction from right to left in Figure 1.

It will be appreciated that if the load current 15 is to follow the reference 16 closely then the error band indicated at 17 in Figure 2 must be small but that the smaller the error band the higher will be the operating frequency and that increases the switching interval losses. By use of the +V and 0V modes during the first part of each half cycle, the current decay between the upper bound 18 and the lower

bound I9 is slower than if +V and -V modes were used and so the switching frequency is decreased and there are less losses. When the rate of decay using the 0V loop is too slow to keep within the error band the strategy reverts to alternate +V and -V modes with the higher frequency switching for the last part of the half cycle so as to keep the signal within the error band I7.

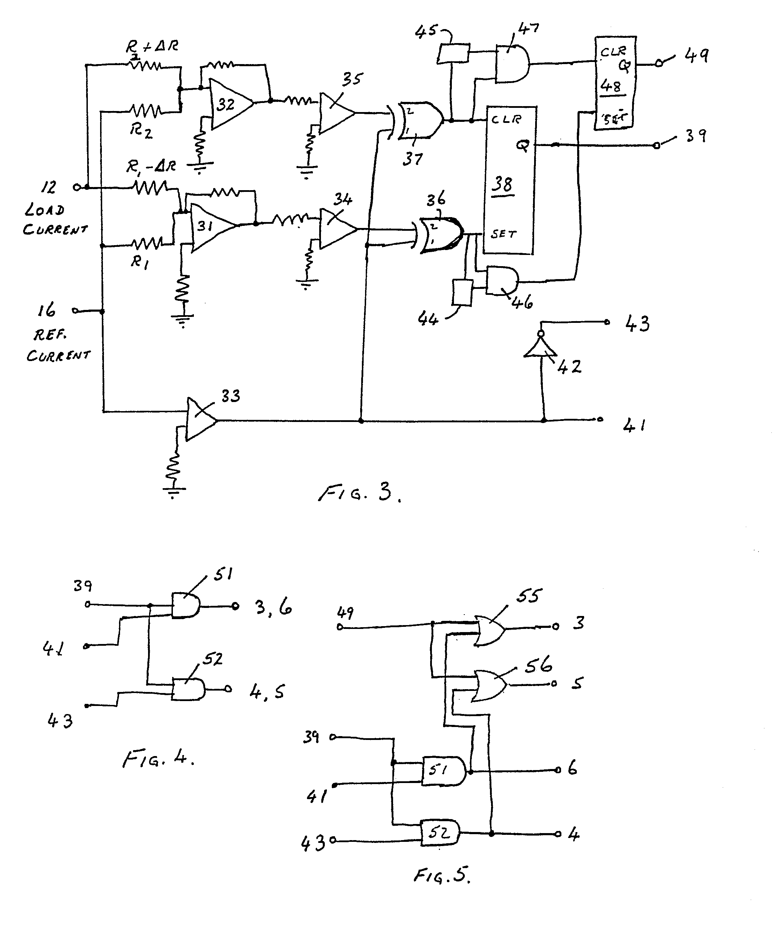

Figure 3 shows a logic circuit which can be used to effect the switching strategy described with reference to Figure 2.

The reference current sine wave I6 is applied to a pair of operational amplifiers operating as comparators 3I and 32 through respective resistors RI and R2 and the measured load current at I2 is applied to the same input of the amplifiers 3I and 32 through resistors whose resistances are respectively a little less than the resistance of RI and a little greater than the resistance of R2 by an amount which determines the difference between the respective error bounds I9 and I8 and the reference wave I6. The effect is to reproduce at the output of an operational amplifier 35 a signal if the measured load current exceeds the upper bound I8 and to produce a signal at the output of an operational amplifier 34 if the measured load current is less than the lower bound I9. These signals are applied to one input of each of a respective pair of exclusive OR gates 36 and 37 whose outputs are connected respectively to the SET and the CLR inputs of a latch 38 whose Q output at 39 will be O after the measured current has exceeded the upper bound I8 until the current is below the lower bound I9 when it switches to I. The latch 38 is active low.

The second input of both gates 36 and 37 is supplied from the output of an operational amplifier 33 operating as a comparator to establish whether the reference current at I6 is above or below earth so as to give a I output during the positive half cycles of the reference current wave and a 0 output during the negative half cycles. The output from the comparator 33 is supplied to a terminal 4I and also through an inverter 42 to an output terminal 43.

Finally, the output of each of the gates 36 and 37 is connected through a time delay 44 or 45 to one input of an AND gate 46 or 47, to the other input of which the output of the gate 36 or 37 is applied directly. The outputs of the two AND gates 46 and 47 are connected respectively to the SET and the CLR terminals of a second latch 48 whose Q output is available at 49.

The purpose of the circuits including the delays 44 and 45 is to detect if, after one of the bounds I8 and I9 has been exceeded and a switching operation has taken place, the current has not been modified to get it back within the error band I7 within the time delay defined by the circuit 44 or 45. The use of those delay circuits to control the switching strategy will be described later.

The outputs at 39,4I,43 and 49 can be applied to any one of several arrangements of logic gates depending upon the particular switching strategy required by a particular load.

To operate in accordance with the switching strategy merely using the +V and -V modes alternately in accordance with known technique, the circuit of Figure 4 would be used; that contains a pair of AND gates 5I and 52 the first of which controls the switching of the switches 3 and 6 together and the second of which controls the switching of the switches 4 and 5 together. Each gate receives one input from the terminal 39 from the latch 38 which will be O or I depending on whether the current last exceeded the upper bound I8 or last became lower than the lower bound I9. Thus the switches 3 and 6 will be switched on and off together as these bounds are crossed in the positive half cycle when a I is received from 4I on the second input of the AND gate 5I indicating that the reference current wave is going through a positive half cycle. Similarly during negative half cycles when there is a I at 43 the switches 3 and 6 will remain open and the switches 4 and 5 will be switched on and off together in accordance with the latch output at 39.

The exclusive OR gates 36 and 37 which each have one input from the output of the comparator 33 ensure that equivalent operation of the latch 38 is achieved during the negative half cycle of the reference current waveform.

In both half-cycles response to the current exceeding the upper bound is at 35 and 37, while response to the current falling below the lower bound is at 34 and 36.

However, to operate in accordance with the invention in the strategy illustrated in Figure 2, the output at 49 from the latch 38 is used in the manner shown in Figure 5, and applied to one input of each of a pair of OR gates 55 and 56. The other input of gate 55 is from the output of gate 5I, and the other input of gate 56 is from the output of gate 52. The outputs of gates 55 and 56 control respectively the power switches 3 and 5.

Assume that switches 3 and 6 are on and that there is a I at 49. Operation in the +V mode is as shown at 22 in Figure 2 until the bound I8 is exceeded, when switch 6 is turned off at 39. Switch 3 remains closed and operation is in 0V mode, and current decay is slow as shown at 2I. When the lower bound I9 is passed switch 6 is again turned on. This operation alternately in +V and 0V modes contines until point 23 when upper bound I8 is exceeded and remains exceeded so that latch 48 is cleared and switch 3 is turned off and operation is in the -V mode. 3 and 6 are switched on again below I9 and operation is then in +V mode alternating with -V mode.

The operation of the switches is shown diagrammatically below Figure 2.

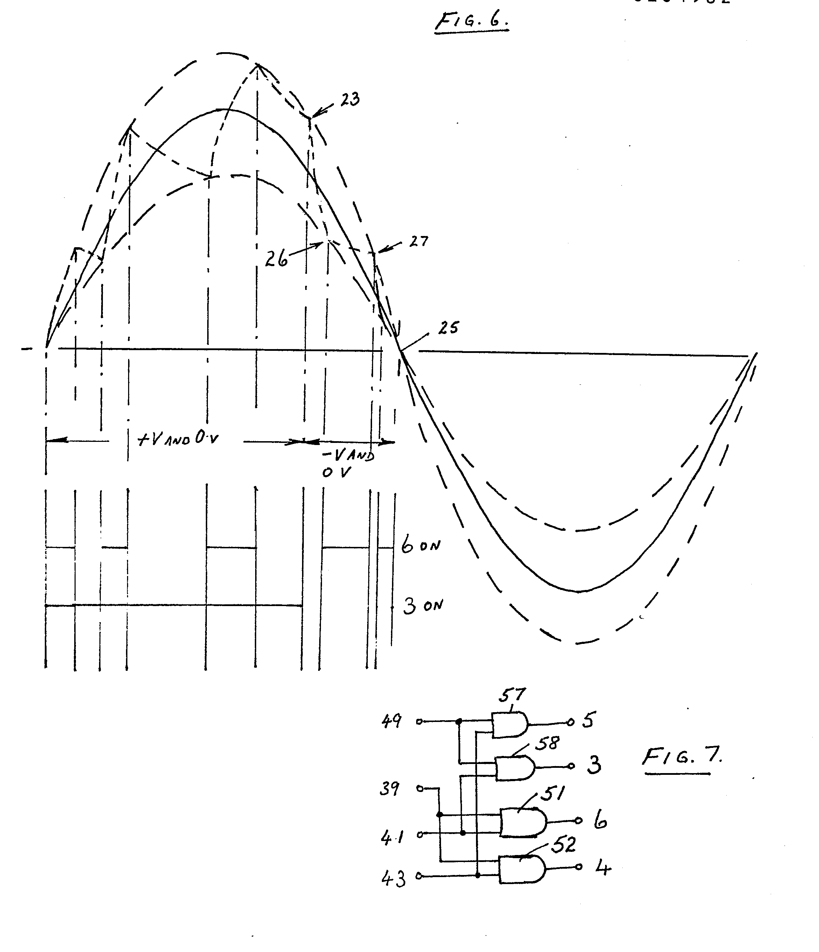

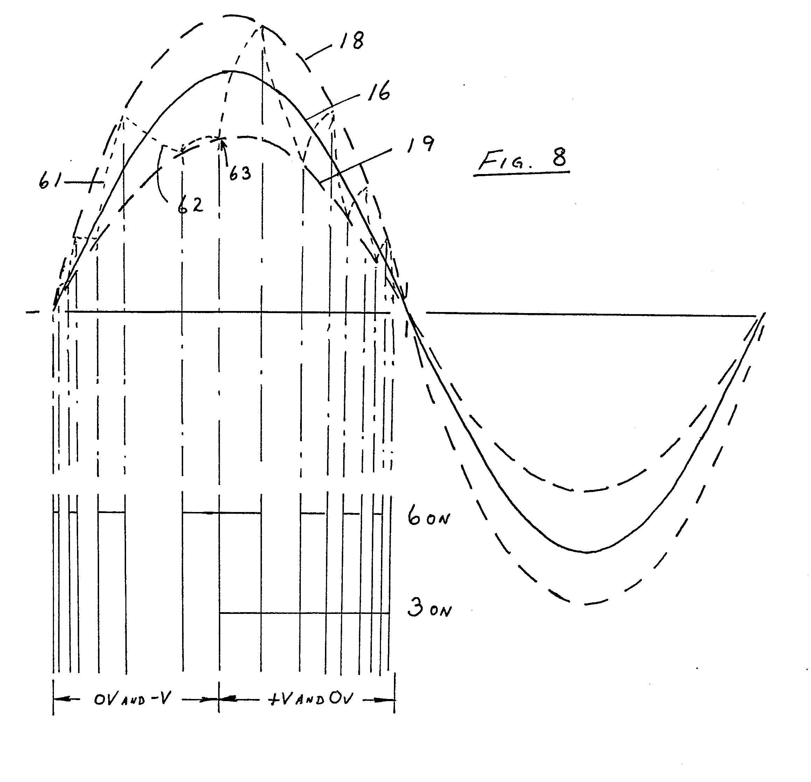

An alternative strategy for use with an inductive load is shown in Figure 6, and is achieved by the logic circuit of Figure 7.

Operation is the same as with Figures 2 and 5 until point 26 is reached, when instead of changing to +V mode, change is to 0V mode. Current decay is slow until point 27 is reached on upper bound I8, when -V mode is initiated. 0V and -V modes alternate until zero cross at 25.

In Figure 7, the OR gates 55, 56 are replaced by AND gates 57 and 58. During the first part of the half-cycle, switch 3 remains ON and switch 6 is cycled OFF and ON as the bounds I8 and I9 are

**0 234 952**

passed. When point 27 is reached 49 goes to 0 and switch 3 is turned off for the rest of the half-cycle. Switch 6 continues to cycle ON and OFF as the bounds are exceeded.

This reduces the amount of switching per half cycle as compared with Figures 2 and 5, and so reduces losses for the same bounds.

If the arrangement of Figure 7 is used with a capacitive load, the operation will be as indicated in Figure 8.

With a capacitive load at the start of each half-cycle of the reference wave, the current through the load will rise even in an OV loop. Thus, as shown at 6l in Figure 8 with switch 3 off and switch 6 on current rises until the upper bound l8 is reached when switch l6 is turned off to complete a -V loop. Current then falls as energy is returned to the supply as indicated at 62 until, when the lower bound l9 is exceeded, switch 6 closes again so that the current continues to rise.

Thus, the first part of the first cycle has alternation between -V and OV modes until, as indicated at 63, the current cannot continue to rise to the upper bound l8, but falls below the lower bound l9 and stays below that bound so that the output at 49 becomes l and from then on operation continues throughout the half-cycle with alternation between OV and +V modes.

Thus, the logic arrangement of Figure 7 would automatically cope with inductive or capacitive loads.

It may be noted that a filter will be included to eliminate high frequency switching components and make the output correspond more closely to the sine wave or whatever is the desired form of the reference wave l6.

**Claims**

1. An electric power source comprising a bridge of switching devices arranged for supply from a D.C. source and arranged to deliver controlled load current to output terminals, and a controller for the switching devices responsive to the detected load current and to a reference current, the controller being arranged to operate the switching devices to cause the bridge to operate in at least two of three different modes; namely a +V mode in which current is delivered from the D.C. source to the load terminals, a -V mode in which current is delivered from the load terminals to the D.C. source, and a 0V mode in which current circulates in a circuit including the load terminals but not including the D.C. source.

2. A power source as claimed in Claim l in which the controller is arranged to cause the bridge to operate in a selected two only of the three different modes at any instant in a half cycle of the reference input.

3. A power source as claimed in either of the preceding claims including logic means for determining the mode of operation in response to the relationship of the reference input to the measured actual current.

4. A power source as claimed in Claim 3 in which the logic means is responsive to the measured current crossing a bound which is a predetermined proportion of the reference current at the instant concerned.

5. A power source as claimed in Claim 3 or Claim 4 in which the logic means is also responsive to the output of a delay circuit giving an indication whether the bound has remained exceeded for a predetermined time.

6. A power source as claimed in any of the preceding claims including a circuit for comparing the instantaneous measured value of delivered current with the instantaneous value of the reference current exceeded or reduced by a predetermined proportion.

7. A power source as claimed in any of the preceding claims in which the controller is arranged to cause the bridge to operate in two difference modes during the first part of a half cycle of the reference input and then if the measured current cannot be brought within the bounds to change to operating alternately in a different two of the three modes for the last part of the half cycle.

8. A power source as claimed in any of the preceding claims in which the bridge is a full wave bridge, and there are means responsive to the polarity of the reference input for determining which two of four switches in the bridge are controlled to determine the operation in the two of the three different modes.

9. A method of operating an electric power source comprising a bridge of switching devices arranged for supply from a D.C. source and arranged to deliver controlled load current to output terminals in which a reference input signal is applied to a controller for the switching devices and the detected instantaneous load current is supplied to the controller and the controller operates the switches in dependence on the two inputs being capable of operating the switching devices in at least two of three different modes.

l0. A method as claimed in Claim 9 in which the controller includes logic means for controlling the switching devices in dependence on its two inputs.

ll. A method as claimed in Claim l0 in which the logic means is arranged to cause the bridge to operate in at least two of three different modes alternately during the first part of each half cycle of the reference input and is capable of causing the switching devices to operate in a different two of the three different modes alternately during a later part of the reference half cycle in dependence on the relationship between the two inputs.

FIG 1.

0234952

FIG. 2.

+V AND Ov LOOPS

+V AND −V LOOPS

6 ON

3 ON

0234952

FIG. 3.

FIG. 4.

FIG. 5.

FIG. 6.

0234952

FIG. 7.

FIG. 8

0234952